# EUROPÄISCHE PATENTSCHRIFT

(11) **EP 1 877 681 B1**
(45) Veröffentlichungstag und Bekanntmachung des Hinweises auf die Patenterteilung: **15.06.2011**
(21) Anmeldenummer: 06724555.5
(22) Anmeldetag: 25.04.2006
(51) Int. Cl.: F16H 3/091

(54) **GETRIEBE MIT IM DIREKTGANG ABKOPPELBARER VORGELEGEWELLE**
TRANSMISSION HAVING AN IDLER SHAFT WHICH CAN BE DECOUPLED IN THE DIRECT GEAR
BOITE DE VITESSES POURVUE D'UN ARBRE INTERMEDIAIRE POUVANT ETRE DECOUPLE EN PRISE DIRECTE

(30) Priorität: 03.05.2005 DE 102005020606
(43) Veröffentlichungstag der Anmeldung: 16.01.2008
(73) Patentinhaber: Daimler AG, 70327 Stuttgart (DE)
(72) Erfinder: GITT, Carsten, 70327 Stuttgart (DE)
(74) Vertreter: JENSEN & SON
(86) Internationale Anmeldenummer: PCT/EP2006/003804
(87) Internationale Veröffentlichungsnummer: WO 2006/117099

(56) Entgegenhaltungen:
- EP-A- 1 279 862
- DE-A1- 4 226 575
- DE-A1- 10 224 064
- DE-A1- 10 239 396
- DE-C- 923 402
- GB-A- 358 462
- GB-A- 2 103 317
- US-A- 5 351 569
- US-A- 5 381 703

## Beschreibung

Die Erfindung betrifft Vorgelegegetriebe nach dem Oberbegriff des Patentanspruchs 1 sowie einen Antriebsstrang mit einem entsprechenden Vorgelegegetriebe.

Die DE 102 39 396 A1 betrifft bereits ein Vorgelegegetriebe mit direktem Gang, dessen Vorgelegewelle sich bei eingelegtem Direktgang nicht mitdreht.

Die US 5,381,703 betrifft ferner ein Vorgelegegetriebe mit einer Eingangswelle, einer Ausgangswelle und einer Vorgelegewelle, wobei der Antrieb der Vorgelegewelle verhindert wird, wenn sich das Vorgelegegetriebe im Direktgang befindet.

Die gattungsgemäße EP 1 279 862 A2 beschreibt ein Vorgelegegetriebe mit einer im Direktgang abkoppelbaren Vorgelegewelle und zwei Eingangskonstanten, bei welchem ein Vorwärtsgang im Kraftfluss über beide Eingangskonstanten verläuft.

Entsprechende Vorgelegegetriebe sind ebenso aus DE 923 402 oder GB 2 103 317 A bekannt.

Aufgabe der Erfindung ist es, ein Fahrzeuggetriebe für Nutzfahrzeuge zu schaffen, dass bei kompakter Bauweise einen guten Wirkungsgrad aufweist.

Diese Aufgabe wird erfindungsgemäß mit den Merkmalen von Patentanspruch 1 gelöst.

Die Erfindung ermöglicht in besonders vorteilhafter Weise eine hohe Anzahl von Getriebegängen, da zwei Eingangskonstanten die Anzahl der Gänge verdoppeln, welche sich aus den übrigen Zahnradpaarungen ergeben. Diese zwei Eingangskonstanten werden zusätzlich genutzt, um gemeinsamen einen Vorwärtsgang zu bilden. Dabei kann der Kraftfluss von der einen Eingangskonstanten über die Vorgelegewelle auf die andere Eingangskonstante und im Anschluss auf eine Hauptwelle verlaufen. Diese Hauptwelle kann ohne Übersetzungsstufe mit der Eingangswelle gekoppelt werden, so dass sich ein Direktgang bildet. Der Hauptwelle kann sich in einer besonders vorteilhaften Ausführungsform eine Range-Gruppe anschließen, die zwei Schaltzustände aufweisen kann, so dass
- sowohl der Vorwärtsgang über die beiden Eingangskonstanten,
- als auch der Direktgang,
- als auch der Rückwärtsgang,
- als auch Vorwärtsgänge, die über ausschließlich eine Eingangskonstante und eine weitere Übersetzungsstufe verlaufen,
jeweils zwei verschiedene Gänge bilden können, so dass sich die Gesamtzahl der Gänge verdoppelt. Dabei kann die Range-Gruppe in besonders vorteilhafter Weise als Planetengetriebe ausgeführt sein, dass
- in dem einen Schaltzustand ins Langsame untersetzt und
- in dem anderen Schaltzustand als Block umläuft, so dass die Hauptwellendrehzahl unverändert an ein Achsgetriebe weitergegeben wird.
Diese Auslegung des Planetengetriebes in Verbindung mit einer entsprechenden Auslegung
- der Übersetzungsverhältnisse im Vorgelegegetriebe und
- des Übersetzungsverhältnisses am Hinterachsantrieb ermöglicht es, den meistgenutzten Fahrbereich eines Nutzfahrzeuges bei cirka 80 Kilometer pro Stunde in einen direkten Durchtrieb zu legen. Bei diesem direkten Durchtrieb
- ist der direkte Gang eingelegt,
- läuft das Planetengetriebe der Range-Gruppe im Block um und
- die Vorgelegewelle ist entkoppelt.

Damit wird der Wirkungsgrad des Getriebes für Nutzfahrzeuge im meistgenutzten Fahrbereich für Langstrecken sehr hoch gehalten. Das Übersetzungsverhältnis kann dabei derart ausgelegt sein, dass sich der Antriebsmotor im verbrauchsgünstigsten Bereich befindet. Dieser verbrauchsgünstigste Antriebsmotordrehzahlbereich liegt beispielsweise bei 6-Zylinder-Diesel-Antriebsmotoren zwischen 1100 bis 1500 U/min bzw. RPM. Dabei liegt der verbrauchsgünstigste Antriebsmotordrehzahlbereich bei hubraumstarken 6-Zylinder-Diesel-Antriebsmotoren eher bei 1100 RPM und bei hubraumschwachen 6-Zylinder-Diesel-Antriebsmotoren eher bei 1500 U/min bzw. RPM.

Die besagte Ausgestaltung des Planetengetriebes mit einer Untersetzung ins Langsame bzw. einem direkten Durchtrieb - d.h. also ohne Übersetzung ins Schnelle - ermöglicht es, die Drehzahlen im Vorgelegegetriebe hoch und das Drehmoment niedrig auszulegen, so dass relativ geringe Kräfte im Vorgelegegetriebe auftreten. Damit ist es möglich,
- die Zahnräder schmal zu dimensionieren und
- das Getriebegehäuse dünnwandig zu dimensionieren.

Das Vorgelegegetriebe kann in besonders vorteilhafter Weise als koaxiales Getriebe ausgeführt sein, welches in besonders vorteilhafter Weise bei in Fahrzeuglängsrichtung längs eingebauten Antriebsmotoren Anwendung findet. Bei einem solchen koaxialen Vorgelegegetriebe fluchten Eingangswelle und Hauptwelle miteinander. Das besagte sich in einer vorteilhaften Ausgestaltung dem Vorgelegegetriebe anschließende Planetengetriebe kann dabei ebenfalls koaxial angeordnet sein.

Die Erfindung ermöglicht trotz der Möglichkeit der Abkoppelung der Vorgelegewelle bei geringem Bauraum eine hohe Anzahl von Gängen - insbesondere Vorwärtsgänge - ohne dass zwangsläufig
- eine zweite Vorgelegewelle oder
- eine sich koaxial zur Vorgelegewelle einer der Hauptwellen über mehrere Zahnradebenen erstreckende Hohlwelle
notwendig ist.

Patentanspruch 7 zeigt eine besonders vorteilhafte Ausgestaltung der Erfindung, die trotz Verwendung einer der Hauptwelle im Leistungsfluss nachgeschalteten Range-Gruppe eine Lagerung der Hauptwelle am Getriebeende ermöglicht.

Weitere Vorteile der Erfindung gehen aus den weiteren Patentansprüchen, der Beschreibung und der Zeichnung vor.

Die Erfindung ist nachfolgend anhand von zwei schematisch dargestellten Ausführungsbeispielen des gesamten Kraftfahrzeugantriebsstranges erläutert.

Dabei zeigen:
- Fig. 1: einen Antriebsstrang mit einem Nutzfahrzeuggetriebe mit einem Vorgelegegetriebe und einer Range-Gruppe,
- Fig. 2: ein Detail aus Fig. 1 und
- Fig. 3: in einer zweiten Ausgestaltung einen Antriebsstrang mit einer gegenüber Fig. 1 modifizierten Range- Gruppe.

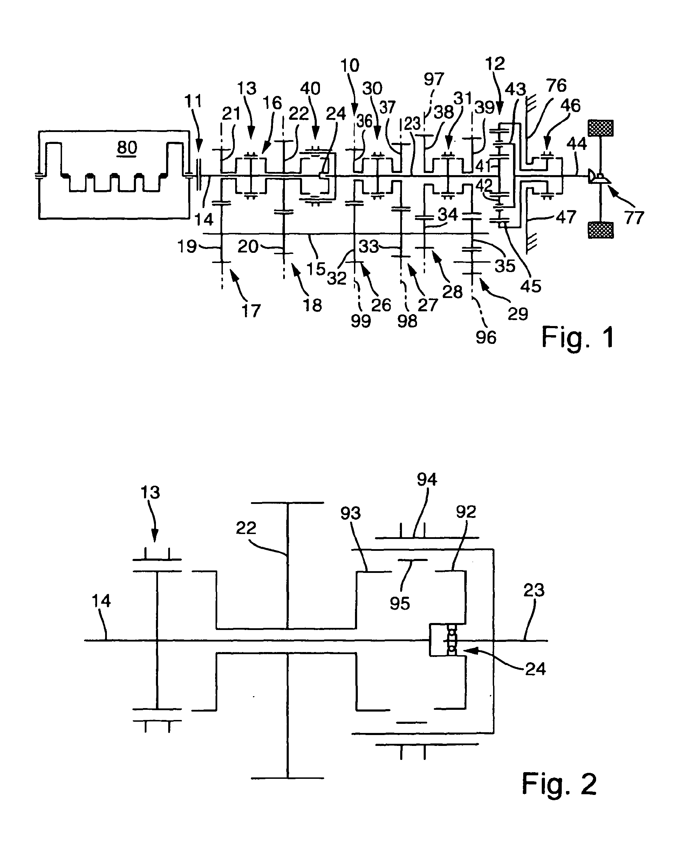

Fig. 1 zeigt einen Antriebsstrang mit einem 6-Zylinder-Diesel-Antriebsmotor 80 und einem Nutzfahrzeuggetriebe 79, dass ein Vorgelegegetriebe 10 mit einer sich diesem geometrisch und im Leistungsfluss anschließenden Range-Gruppe 12 umfasst. Die Range-Gruppe 12 ist dabei als Planetengetriebe ausgebildet.

Einer Kurbelwelle des 6-Zylinder-Diesel-Antriebsmotors 80 schließt sich im Kraftfluss eine Anfahrkupplung 11 an, der das besagte Vorgelegegetriebe 10 folgt. Dieses Vorgelegegetriebe 10 weist eine Splitgruppe 13 auf, so dass insgesamt ein 3-Gruppengetriebe vorliegt. In der Splitgruppe 13 erfolgt die Übergabe der Antriebsleistung von einer Getriebeeingangswelle 14 zu einer Vorgelegewelle 15, wobei die Übertragung je nach Schaltzustand eines Schaltelementes 16 über
- eine erste Eingangskonstante 17 oder
- eine zweite Eingangskonstante 18 oder
- beide Eingangskonstanten 17, 18
erfolgen kann.

Die Abtriebszahnräder 19, 20 der Eingangskonstanten 17, 18 sind drehfest mit der Vorgelegewelle 15 verbunden, während die Antriebszahnräder 21, 22 der Eingangskonstanten 17, 18 jeweils einzeln über das Schaltelement 16 drehfest mit der Getriebeeingangswelle 14 verbindbar sind. Das Schaltelement 16 ist dabei axial zwischen den beiden Antriebszahnrädern 21, 22 der Eingangskonstanten 17, 18 angeordnet.

Weiterhin weist das Vorgelegegetriebe 10 auf der der Getriebeeingangswelle 14 abgewandeten Seite der Splitgruppe 13 eine Hauptwelle 23 auf, welche in einem Wälzlager 24 drehbar gegenüber der Getriebeeingangswelle 14 gelagert ist. Die Getriebeeingangswelle 14 und die Hauptwelle 23 sind fluchtend zueinander angeordnet. Parallel beabstandet zur Hauptwelle 23 erstreckt sich die Vorgelegewelle 15. Die Vorgelegewelle 15 und die Hauptwelle 23 sind über Zahnradpaare 26, 27, 28 sowie eine Rückwärtsgangstufe 29 miteinander über Schaltelemente 30 und 31 miteinander in Antriebsverbindung bringbar. Von diesen Zahnradpaaren 26, 27, 28 bzw. der Rückwärtsgangstufe 29 werden somit vier Zahnradebenen 99, 98, 97, 96 gebildet, die jeweils beiden Getriebekonstanten 17, 18 zugeordnet sind. Dabei ist das eine Schaltelement 30 axial zwischen den ersten beiden Zahnradebenen 99, 98 angeordnet, wohingegen das andere Schaltelement zwischen den anderen beiden Zahnradebenen 97, 96 angeordnet ist.

Antriebszahnräder 32, 33, 34, 35 der Zahnradpaare 26 bis 28 und der Rückwärtsgangstufe 29 sind drehfest mit der Vorgelegewelle 15 verbunden. Abtriebszahnräder 36, 37 der Zahnradpaare 26, 27 sind über das Schaltelement 30 jeweils einzeln mit der Hauptwelle 23 verbindbar, während Abtriebszahnräder 38, 39 des Zahnradpaares 28 und der Rückwärtsgangstufe 29 jeweils einzeln über das Schaltelement 31 mit der Hauptwelle 23 verbindbar sind.

Das Schaltelement 16 verbindet in einem ersten Schaltzustand das Antriebszahnrad 21 mit der Getriebeeingangswelle 14. In dem in Fig. 1 dargestellten Neutralzustand ist das Schaltelement 16 ausgekuppelt, so dass die Antriebszahnräder 21, 22 jeweils frei gegeneinander und gegenüber der Getriebeeingangswelle 14 verdrehbar sind. In einem zweiten Schaltzustand verbindet das Schaltelement 16 das Antriebszahnrad 22 mit der Getriebeeingangswelle 14.

Das Schaltelement 30 verbindet in einem ersten Schaltzustand das Abtriebszahnrad 36 mit der Hauptwelle 23. In dem in Fig. 1 skizzierten Neutralzustand des Schaltelementes 30 sind die Abtriebszahnräder 36, 37 frei gegeneinander und gegenüber der Hauptwelle 23 verdrehbar. In einem zweiten Schaltzustand ist die Hauptwelle 23 über das Schaltelement 30 drehfest mit dem Abtriebszahnrad 37 verbunden.

In einem ersten Schaltzustand verbindet das Schaltelement 31 das Abtriebszahnrad 38 drehfest mit der Hauptwelle 23. In dem in Fig. 1 dargestellten Neutralzustand ist des Schaltelementes 31 sind die Abtriebszahnräder 38, 39 gegeneinander und gegenüber der Hauptwelle 23 verdrehbar. In einem zweiten Schaltzustand verbindet das Schaltelement 31 das Abtriebszahnrad 39 drehfest mit der Hauptwelle 23.

Ein Schaltelement 40 ist in drei Stellungen verschieblich. In der in Fig. 1 dargestellten mittigen Neutralstellung sind
- die Getriebeeingangswelle 14,
- die Hauptwelle 23 und
- das als Losrad ausgeführte Antriebszahnrad 22
frei gegeneinander verdrehbar, sofern das Schaltelement 16 nicht in dem besagten zweiten Schaltzustand das Antriebszahnrad 22 mit der Getriebeeingangswelle 14 verbindet.

Wird eine detailliert in Fig. 2 ersichtliche Schiebemuffe 94 des Schaltelementes 40 in die auf das Getriebeende bzw. die Range-Gruppe 12 weisende Richtung so weit verschoben, dass eine radial innen bewegungsfest an der Schiebemuffe 94 angeordnete Schaltverzahnung 95 in eine korrespondierende Schaltverzahnung 92 der Getriebeeingangswelle 14 eingreift, so ist eine drehfeste Verbindung zwischen der Hauptwelle 23 und der Getriebeeingangswelle 14 hergestellt. Der direkte Gang ist demzufolge so im Vorgelegegetriebe 10 eingelegt, dass die Vorgelegewelle 15 nicht über eine Zahnradpaarung angetrieben wird. Allenfalls infolge der Lagerreibung der Losräder erfolgt eine geringer, für den Gesamtwirkungsgrad des Nutzfahrzeuggetriebes zu vernachlässigender, Antrieb der Vorgelegewelle 15 im Direktgang.

Wird die Schiebemuffe 94 des Schaltelementes 40 hingegen in die entgegengesetzte Richtung - d.h. in die auf das Antriebszahnrad 22 weisende Richtung - so weit verschoben, dass die besagte Schaltverzahnung 95 in eine korrespondierende Schaltverzahnung 93 des Antriebszahnrades 22 eingreift, so ist eine drehfeste Verbindung zwischen der Hauptwelle 23 und dem Antriebszahnrad 22 hergestellt. Ist nun zusätzlich das Schaltelement 16 in den ersten Schaltzustand eingerückt, so dass das Antriebszahnrad 21 mit der Getriebeeingangswelle 14 verbunden ist, so ist ein Vorwärtsgang eingelegt, dessen Kraftfluss über die erste Eingangskonstante 17 und die zweite Eingangskonstante 18 bis hin zur Range-Gruppe 12 verläuft und von dieser je nach deren Schaltzustand weitergeleitet wird.

Wird das Schaltelement 16 in diesen ersten Schaltzustand verbunden kann die Eingangskonstante 17 alternativ mit einer Zahnradpaarung 26, 27, 28, 29 eines Vorwärtsgang oder des Rückwärtsganges in Leistungsübertragung geschaltet werden. Wird das Schaltelement 16 hingegen in den zweiten Schaltzustand verschoben, so dass das Antriebszahnrad 22 mit der Getriebeeingangswelle 14 verbunden wird, so kann die Eingangskonstante 18 alternativ mit einer Zahnradpaarung 26, 27, 28, 29 eines Vorwärtsgang oder des Rückwärtsganges in Leistungsübertragung geschaltet werden.

Die Range-Gruppe 12 besitzt ein Sonnenrad 41, welches drehfest mit der Hauptwelle 23 verbunden ist. Ferner besitzt die Range-Gruppe 12 mehrere Planeten 42, welche gegenüber einem Steg 43 drehbar gelagert sind, der drehfest mit der Getriebeausgangswelle 44 verbunden ist, sowie ein Hohlrad 45.

Über ein Schaltelement 46 ist in einem ersten Schaltzustand die Hauptwelle 23 drehfest mit dem Hohlrad 45 verbunden. D.h. die Range-Gruppe 12 läuft im Block um, so dass die Drehzahl der Hauptwelle 23 unverändert auf die Getriebeausgangswelle 44 übertragen wird. In einem mittigen Neutralzustand sind die Hauptwelle 23 und das Hohlrad 45 über das Schaltelement 46 nicht miteinander gekoppelt. D.h. die Range-Gruppe 12 ist in Neutral geschaltet und überträgt keine Leistung auf die Getriebeausgangswelle 44. In einem zweiten Schaltzustand verbindet das Schaltelement 46 das Hohlrad 45 mit einem Getriebegehäuse 47, so dass die Drehzahl der Hauptwelle 23 bei einer Erhöhung des Drehmomentes ins Langsame untersetzt wird.

Der Getriebeausgangswelle 44 schließt sich ein Achsgetriebe 78 an, dass eine Übersetzungsstufe 77 aufweist. Diese Übersetzungsstufe ist derart ausgelegt, dass der 6-Zylinder-Diesel-Antriebsmotor 80 bei
- eingelegtem Direktgang
- im Block umlaufenden Planetengetriebe und
- einer Fahrzeuggeschwindigkeit von 80 Kilometer pro Stunde eine Drehzahl aufweist, die zwischen 1100 und 1500 U/min bzw. RPM liegt.

Das Nutzfahrzeuggetriebe weist sechzehn Vorwärtsgänge und vier Rückwärtsgänge auf. Zur Verwirklichung von sechs Vorwärtsgängen kann jeder der beiden Eingangskonstanten 17, 18 im Kraftfluss eine der Zahnradstufen 26, 27, 28 folgen. Zur Verwirklichung eines weiteren Vorwärtsganges kann der ersten Eingangskonstante 17 die zweite Eingangskonstante 18 als Übersetzungsstufe folgen. Einen weiteren Vorwärtsgang bildet der direkte Gang. Diesen insgesamt acht Vorwärtsgängen schließt sich die Range-Gruppe 12 an, die zum einen direkten Durchtrieb auf die Getriebeausgangswelle 44 und zum anderen eine Untersetzung ins Langsame ermöglicht, so dass sich insgesamt die besagten sechzehn Vorwärtsgänge bilden. Die vier Rückwärtsgänge ergeben sich dadurch, dass die eine Rückwärtsgangstufe 29 mit den beiden Eingangskonstanten 17, 18 zu zwei Rückwärtsgängen kombiniert werden kann, die über die Range-Gruppe 12 direkt auf die Getriebeausgangswelle 44 oder alternativ über die Untersetzung ins Langsame auf die Getriebeausgangswelle 44 geleitet werden kann.

Somit kommt dieses Nutzfahrzeuggetriebe trotz Abkuppelbarkeit der Vorgelegewelle 15 mit insgesamt sechs Zahnradebenen zur Verwirklichung der oben genannten Anzahl von Gängen aus.

Das Vorgelegegetriebe 10 weist eine zusätzliche Möglichkeit zum Einlegen des Direktganges auf. Wird
- das Schaltelement 16 in den besagten zweiten Schaltzustand verschoben, in dem es das Antriebszahnrad 22 mit der Getriebeeingangswelle 14 verbindet und
- das Schaltelement 40 in die auf das Antriebszahnrad 22 weisende Richtung verschoben, so dass es das Antriebszahnrad 22 mit der Hauptwelle 23 verbindet,
so ist der direkte Gang über das Antriebszahnrad 22 eingelegt, wobei die Vorgelegewelle 15 jedoch nicht ausgekoppelt ist. Dieser zusätzliche Schaltzustand mit eingekuppelter Vorgelegewelle 15 kann dann sinnvoll sein, wenn der Antrieb der am Vortrieb des Nutzfahrzeuges unbeteiligten Vorgelegewelle 15 erwünscht ist. Beispielsweise kann an die Vorgelegewelle eine Bremse für eine Zentralsynchronisierung oder eine Getriebeölpumpe angeschlossen sein, deren Betrieb in bestimmten Betriebszuständen auch im Direktgang erwünscht sein kann. Jedoch kann diese Schaltkombination mit unbeteiligter eingekuppelter Vorgelegewelle 15 auch von einer automatisierten Steuerung ausgeschlossen werden, so dass dieser Schaltzustand nicht vom Fahrer wählbar ist. Ebenso ist es möglich, dass eine automatisierte Getriebesteuerung bedarfsweise selbsttätig zwischen Direktgang mit eingekuppelter und Direktgang mit ausgekuppelter Vorgelegewelle wechselt.

Eine getriebegehäusefeste Trennwand 76 befindet sich zwischen dem Planetengetriebe der Ranggruppe 12 und dem Schaltelement 46 der Range-Gruppe 12. Dabei befindet sich das Planetengetriebe auf der dem Vorgelegegetriebe zugewandten Seite der Trennwand 76, wohingegen das Schaltelement 46 auf der entgegengesetzten Seite liegt.

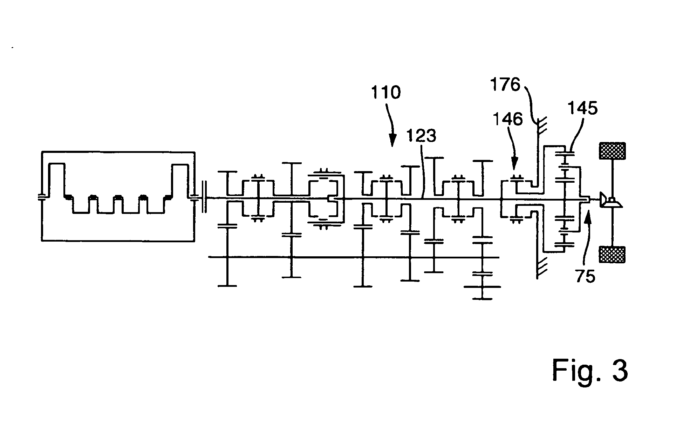

Fig. 3 zeigt in einer zweiten Ausgestaltung einen Antriebsstrang mit einer gegenüber Fig. 1 modifizierten Range-Gruppe. Analoge Bauteile sind mit um 100 erhöhten Bezugsziffern versehen. Im Gegensatz zu Fig. 1 befindet sich das Planetengetriebe auf der vom Vorgelegegetriebe 110 abgewandten Seite der Trennwand 176, wohingegen das Schaltelement 146 auf der entgegengesetzten Seite liegt. Dadurch, dass somit das Schaltelement 146 auf der dem Vorgelegegetriebe 110 zugewandten Seite der Trennwand 76 liegt, kann das Schaltelement 146 derart ausgeführt sein, dass es das Planetengetriebe auf Block bzw. in den Durchtrieb schaltet, indem es die Hauptwelle 123 mit dem Hohlrad 145 koppelt. In diesem Fall sind Sonnenrad und Hohlrad 145 des Planetengetriebes fest miteinander gekoppelt. Wie in Fig. 2 ersichtlich, ist es mit dieser Anordnung möglich, die Lagerung 175 der Hauptwelle 123 bis an das Getriebeende des Nutzfahrzeuggetriebes 79 zu führen, wodurch sich ein hinsichtlich der Lagerbelastungen bzw. Lagerdimensionierungen ein konstruktiver Vorteil ergibt.

Das in beiden Ausführungsbeispielen dargestellte Achsgetriebe kann sowohl ein Hinterachsgetriebe als auch das Achsgetriebe einer Durchtriebsachse sein.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Vorgelegegetriebe mit einer im Direktgang abkoppelbaren Vorgelegewelle (15) und zwei Eingangskonstanten (17, 18), bei welchem ein Vorwärtsgang im Kraftfluss über beide Eingangskonstanten (17, 18) verläuft,
**dadurch gekennzeichnet, dass**
die eine Eingangskonstante (18) ein Losrad (22) aufweist, welches axial zwischen zwei Schaltelementen (16, 40) angeordnet ist, wobei mittels dem einen Schaltelement (16) eine drehfeste Verbindung zwischen diesem Losrad (22) und einer Getriebeeingangswelle (14) und mittels dem anderen Schaltelement (40) eine drehfeste Verbindung zwischen diesem Losrad (22) und einer Hauptwelle (23) herstellbar ist.

2. Vorgelegegetriebe nach Patentanspruch 1,
**dadurch gekennzeichnet, dass**
bezüglich der beiden Eingangskonstanten (17, 18) das besagten andere Schaltelement (40) ausschließlich der einen Eingangskonstante (18) zugeordnet ist und mit diesem Schaltelement (40) in einer weiteren Stellung der Direktgang einlegbar ist.

3. Vorgelegegetriebe nach einem der vorhergehenden Patentansprüche,
**dadurch gekennzeichnet, dass**
zwei Schaltmöglichkeiten für den Direktgang, vorgesehen sind, von denen die eine Schaltmöglichkeit eine Abkoppelung der Vorgelegewelle (15) ermöglicht, wohingegen die andere Schaltmöglichkeit ein Ankoppelung der Vorgelegewelle (15) ermöglicht.

4. Vorgelegegetriebe nach Patentanspruch 2,
**dadurch gekennzeichnet, dass**
die beiden Eingangskonstanten (17, 18) Losräder (21, 22) aufweisen die koaxial drehbar auf einer Getriebeeingangswelle (14) angeordnet sind, wobei mittels des besagten anderen Schaltelementes (40) in einem Schaltzustand eine drehfeste Verbindung zwischen der Hauptwelle (23) und der Getriebeeingangswelle (14) herstellbar ist, wobei letzteres Schaltelement (40) in diesem Schaltzustand eine Drehbarkeit des einen Losrad (22) gegenüber der Eingangswelle (14) ermöglicht, wenn ein axial zwischen diesen beiden Losrädern (21, 22) angeordnet und mit beiden Losrädern (21, 22) koppelbares Schaltelement (16) das eine Losrad (22) freigibt.

5. Vorgelegegetriebe nach einem der vorhergehenden Patentansprüche,
**dadurch gekennzeichnet, dass**
die Hauptwelle (23 bzw. 123) eingangsseitig gegenüber der Getriebeeingangswelle (14) mittels einer Wälzlagerung (24) gelagert ist.

6. Antriebsstrang mit einem Vorgelegegetriebe nach einem der vorhergehenden Patentansprüche,
**dadurch gekennzeichnet, dass** die Hauptwelle (23) des Vorgelegegetriebes (10) mit einem Sonnenrad (41) eines Planetengetriebes einer Range-Gruppe (12) verbunden ist, dessen Planetenträger (43) mit einer Getriebeausgangswelle (44) verbunden ist und dessen Hohlrad (45) einerseits zur Herstellung einer Untersetzung ins Langsame mit einem Getriebegehäuse (47) koppelbar ist und andererseits zur Herstellung eines direkten Durchtriebes mit einer Welle der Getriebeausgangswelle (44) oder der Hauptwelle (123) koppelbar ist.

7. Antriebsstrang nach Patentanspruch 6,
**dadurch gekennzeichnet, dass**
die besagte Welle die Hauptwelle (123) ist.

8. Antriebsstrang nach Patentanspruch 6,
**dadurch gekennzeichnet, dass**
die besagte Welle die Getriebeausgangswelle (44) ist.

9. Antriebsstrang nach Patentanspruch 7 oder 8,
**dadurch gekennzeichnet, dass**
die Getriebeeingangswelle (14) über ein Anfahrelement mit einem Antriebsmotor (80) verbunden ist, wohingegen die Getriebeausgangswelle (44) mit einem Achsgetriebe (78) verbunden ist, das eine Übersetzungsstufe (77) umfasst, wobei deren Übersetzungsverhältnis dabei derart ausgelegt ist, dass der Antriebsmotor in einem Drehzahlbereich zwischen 800 bis 1500 U/min bzw. RPM. betreibbar ist, wenn eine Fahrzeuggeschwindigkeit bei 80 Kilometer pro Stunde liegt und der Direktgang eingelegt ist und Hauptwelle (23) und die Getriebeausgangswelle (44) über die Range-Gruppe drehfest miteinander gekoppelt sind.

## Claims

1. Auxiliary gearbox, comprising a layshaft (15) which can be uncoupled in direct drive and two input constants (17, 18), wherein a forward gear runs via both input constants (17, 18) in the power flow,
**characterised in that**
one input constant (18) comprises an idler (22) which is axially located between two shifting components (16, 40), wherein a non-rotatable connection can be established between said idler (22) and a gearbox input shaft (14) by means of one shifting component (16) and a non-rotatable connection can be established between said idler (22) and a main shaft (23) by means of the other shifting component (40).

2. Auxiliary gearbox according to patent claim 1,
**characterised in that**
with respect to the two input constants (17, 18), the said other shifting component (40) is exclusively assigned to the one input constant (18), and **in that** direct drive can be engaged with this shifting component (40) in a further position.

3. Auxiliary gearbox according to any of the preceding patent claims,
**characterised in that**
two switching opportunities are provided for direct drive, of which one switching opportunity allows an uncoupling of the layshaft (15), while the other switching opportunity allows a coupling of the layshaft (15).

4. Auxiliary gearbox according to patent claim 2,
**characterised in that**
the two input constants (17, 18) comprise idlers (21, 22) which are coaxially and rotatably mounted on a gearbox input shaft (14), wherein by means of the said other shifting component (40) a non-rotatable connection can be established between the main shaft 23 and the gearbox input shaft (14) in one switching state, wherein the latter shifting component (40) allows a rotation of the one idler (22) with respect to the input shaft (14) if a shifting component (16) located axially between the two idlers (21, 22) and capable of being coupled to the two idlers (21, 22) releases the one idler (22).

5. Auxiliary gearbox according to any of the preceding patent claims,
**characterised in that**
the main shaft (23 or 123 respectively) is bearing-mounted on the input side by means of an antifriction bearing arrangement (24) with respect to the gearbox input shaft (14).

6. Drive train comprising an auxiliary gearbox according to any of the preceding patent claims,
**characterised in that**
the main shaft (23) of the auxiliary gearbox (10) is connected to a sun gear (41) of a planetary gearbox of a range change group (12), the planet carrier (43) of which is connected to a gearbox output shaft (44) and the internal gear (45) of which can on the one hand be coupled to a transmission housing (47) for providing a speed reduction and on the other hand to a shaft of the gearbox output shaft (44) or of the main shaft (123) for providing a direct through-drive.

7. Drive train according to patent claim 6,
**characterised in that**
the said shaft is the main shaft (123).

8. Drive train according to patent claim 6,
**characterised in that**
the said shaft is the gearbox output shaft (44).

9. Drive train according to claim 7 or 8,
**characterised in that**
the gearbox input shaft (14) is connected to an engine (80) via a starting element, whereas the gearbox output shaft (44) is connected to an axle drive (78) comprising a gear ratio (77), its speed ratio being designed such that the engine can be operated in a speed range between 800 and 1500 rpm if the travelling speed is approximately 80 km per hour and direct drive is engaged, and if the main shaft (23) is non-rotatably coupled to the gearbox output shaft (44) via the range change group.

## Revendications

1. Boîte de vitesses à renvoi pourvue d'un arbre intermédiaire (15) pouvant être découplé en prise directe et de deux constantes d'entrée (17, 18), une vitesse avant s'étendant dans le flux de force sur les deux constantes d'entrée (17, 18), **caractérisée en ce qu'**une constante d'entrée (18) présente un pignon fou (22) lequel est disposé axialement entre deux éléments de changement de vitesse (16, 40), à l'aide de l'un (16) des éléments de changement de vitesse une solidarisation en rotation peut être réalisée entre ledit pignon fou (22) et un arbre (14) d'entrée de boîte et à l'aide de l'autre élément de changement de vitesse (40) une solidarisation en rotation peut être réalisée entre ledit pignon fou (22) et un arbre principal (23).

2. Boîte de vitesses à renvoi selon la revendication 1, **caractérisée en ce** qui concerne les deux constantes d'entrée (17, 18) ledit autre élément de changement de vitesse (40) est uniquement associé à l'une (18) des constantes d'entrée et avec cet élément de changement de vitesse (40) dans une autre position, la prise directe peut être enclenchée.

3. Boîte de vitesses à renvoi selon l'une quelconque des revendications précédentes, **caractérisée en ce que** deux possibilités de changement de vitesse pour la prise directe sont prévues, parmi lesquelles l'une des possibilités de changement de vitesse permet un découplage de l'arbre intermédiaire (15) tandis que l'autre possibilité de changement de vitesse permet le couplage de l'arbre intermédiaire (15).

4. Boîte de vitesses à renvoi selon la revendication 2, **caractérisée en ce que** les deux constantes d'entrée (17, 18) présentent des pignons fous (21, 22) qui sont disposés en rotation coaxiale sur un arbre d'entrée (14) de boîte, au moyen dudit autre élément de changement de vitesse (40) dans un état de changement de vitesse, une solidarisation en rotation entre l'arbre principal (23) et l'arbre d'entrée (14) de boîte peut être réalisée, le dernier élément de changement de vitesse (40) dans cet état de changement de vitesse permettant une rotation de l'un (22) des pignons fous par rapport à l'arbre d'entrée (14), lorsqu'un élément de changement de vitesse (16) disposé axialement entre ces deux pignons fous (21, 22) et pouvant être couplé avec les deux pignons fous (21, 22) libère un (22) des pignons fous.

5. Boîte de vitesses à renvoi selon l'une quelconque des revendications précédentes, **caractérisée en ce que** l'arbre principal (23 ou 123) est monté côté entrée vis-à-vis de l'arbre d'entrée (14) de boîte au moyen d'un palier à roulement (24).

6. Chaîne cinématique avec une boîte de vitesses à renvoi selon l'une quelconque des revendications précédentes, **caractérisée en ce que** l'arbre principal (23) de la boîte de vitesse à renvoi (10) est relié à une roue solaire (41) d'un engrenage planétaire d'un groupe relais (12) dont la cage de transmission planétaire (43) est reliée à un arbre de sortie (44) de boîte et dont la couronne (45) peut être couplée d'une part pour la réalisation d'une réduction à vitesse faible avec un carter (47) de boîte et peut être couplée d'autre part pour la réalisation d'une prise directe avec un arbre (44, 123).

7. Chaîne cinématique selon la revendication 6, **caractérisée en ce que** ledit arbre est l'arbre principal (123).

8. Chaîne cinématique selon la revendication 6, **caractérisée en ce que** ledit arbre est l'arbre de sortie (44) de boîte.

9. Chaîne cinématique selon la revendication 7 ou 8, **caractérisée en ce que** l'arbre d'entrée (14) de boîte est relié au moteur d'entraînement (80) par un élément de démarrage tandis que l'arbre de sortie (44) de boîte est relié à un pont moteur (78) qui comprend un étage de réduction (77), dont le rapport de démultiplication étant conçu de manière que le moteur d'entraînement puisse fonctionner dans une plage de régime moteur entre 800 et 1 500 t/min lorsqu'une vitesse de véhicule est de 80 kilomètres par heure et que la prise directe est enclenchée et que l'arbre principal (23) et l'arbre de sortie (44) de boîte sont couplés ensemble de manière solidaire en rotation à l'aide du groupe relais.
